# EUROPÄISCHE PATENTSCHRIFT

(11) **EP 2 384 918 B1**
(45) Veröffentlichungstag und Bekanntmachung des Hinweises auf die Patenterteilung: **27.06.2018**
(21) Anmeldenummer: 11003600.1
(22) Anmeldetag: 03.05.2011
(51) Int. Cl.: B60J 10/17, B60J 10/265, B60J 10/80

(54) **Herstellungsverfahren für eine Abdeck- bzw. Dichtungslippe für ein KFZ und dazugehörige KFZ-Abdeck- bzw. Dichtungslippe**
Method for producing a sealing lip for motor vehicles and corresponding sealing lip
Procédé de fabrication d'une lèvre d'étanchéité pour véhicules automobiles et lèvre d'étanchéité correspondante

(30) Priorität: 03.05.2010 DE 102010016756
(43) Veröffentlichungstag der Anmeldung: 09.11.2011
(73) Patentinhaber: Toyoda Gosei Europe NV, 1930 Zaventem (BE)
(72) Erfinder: Schäfer, Andreas, 66620 Nonnweiler (DE); Kanefeyer, Damien, 66740 Saarlouis (DE); Lorig, Peter, 66127 Saarbrücken (DE); Mlivic, Rasema, 43001 Chomutov (CZ)
(74) Vertreter: Wieske, Thilo

(56) Entgegenhaltungen:
- EP-A1- 1 566 302
- EP-A2- 0 719 637
- WO-A1-00/05088
- WO-A2-01/96135
- DE-A1- 19 644 463
- DE-A1-102008 027 877
- US-A- 4 448 835
- US-A1- 2002 110 663

## Beschreibung

Die Erfindung betrifft ein Herstellungsverfahren für eine Abdecklippe für den Einstiegsbereich von Kraftfahrzeugen und eine Abdecklippe für den Einstiegsbereich von Kraftfahrzeugen mit einem Gummiprofil.

Bei Kraftfahrzeugen der Oberklasse war die Abdecklippe für den Einstiegsbereich von Kraftfahrzeugen mit textilem Material überzogen und weist heute noch eine "Cordoptik" auf, wobei hohe Verschleißbeständigkeit, wie sie insbesondere bei Taxis benötigt wird, mit einem guten ästhetischen Eindruck kombiniert werden. Das textile Material schützt die Dichtung vor Verschleiß und bringt auch einen besseren haptischen Eindruck mit sich als eine Gummioberfläche. Zudem sind verschiedene Farboptionen möglich, die mit der jeweiligen Innenraumgestaltung abgestimmt werden können. Nachteilig sind bei einer solchen Abdecklippe die hohen Herstellungskosten, insbesondere für das textile Material und das Auflaminieren desselben auf die Gummidichtung.

Eine Alternative zu dem Auflaminieren von textilem Material stellt das elektrostatische Aufflocken auf das Gummiprofil dar, mit dem bei geringeren Kosten eine äquivalente Verschleißbeständigkeit erreicht wird. Allerdings ist hier der haptische Eindruck deutlich schlechter als bei auflaminiertem textilen Material und es ist zudem schwierig, die Abdecklippe einzufärben. Daher wird diese Technik eher bei Mittelklassefahrzeugen verwendet.

Bei dem Aufbringen eines Flockbandes (Flocktape) auf das Gummiprofil sind bei gleicher Verschleißbeständigkeit auch nahezu beliebige Farbgebungen möglich, jedoch ist auch hier der haptische Eindruck schlechter als bei auflaminiertem textilen Material, obwohl die Herstellungskosten in etwa gleich sind.

Eine weitere Möglichkeit ist das Aufbringen eines TPV-Films auf das Gummiprofil. Dies hat den Vorteil, daß der optische Eindruck der TPV-Oberfläche besser ist als der einer Gummioberfläche und auch verschiedene Farbgebungen möglich sind. Allerdings ist auch hier der haptische Eindruck schlechter als bei auflaminiertem textilen Materials, weshalb diese Lösung eher in der Unterklasse Anwendung findet.

Es besteht ebenfalls die Möglichkeit, eine Farbe mit relativ rauher Oberfläche auf das Gummiprofil aufzubringen. Auf diese Weise kann ein dem auflaminierten textilen Material ähnlicher optischer und haptischer Eindruck erreicht werden. Allerdings ist das Herstellungsverfahren nur schwer kontrollierbar und der Ausschuß daher relativ hoch.

Es kann auch ein EPDM-Film mit rauher Oberfläche auf das Gummiprofil coextrudiert werden. Gegebenenfalls kann anschließend noch eine Farbe mit rauher Oberfläche auf den EPDM-Film aufgebracht werden. Auf diese Weise wird ein ähnlicher optischer und haptischer Eindruck erzielt wie bei auflaminiertem textilem Material, allerdings ist die Farbgebung schwierig.

Aus der DE 10 2005 019 735 A1 ist ein Dichtungsstrang, insbesondere zur Abdichtung von Fahrzeugtüren oder -fenstern, bekannt, bei dem ein sich über einen Teil des Strangumfangs oder den ganzen Strangumfang erstreckender Oberflächenabschnitt mit einer Beschichtung versehen ist, wobei die Beschichtung und/oder die die Beschichtung tragende Dichtungsmaterialoberfläche eine Strukturierung aufweisen bzw. aufweist. Die Beschichtung kann eine Lackbeschichtung sein.

Die DE 20 2005 004 006 U1 beschreibt ebenfalls eine Dichtungsleiste für die Berandung der Öffnung eines Fahrzeugs oder einer mit einer solchen Öffnung zusammenwirkenden Tür.

Aus der WO 01/96135 A2 ist eine Dichtung aus Kompositmaterial bekannt, die eine Oberflächenschicht aus expandiertem thermoplastischen Material umfaßt.

Die WO 00/05088 A1 beschreibt eine Dichtung mit einer Kontaktoberfläche aus vernetzten Partikeln.

Ein Verfahren zum Dekorieren eines extrudierten Gummiproduktes ist aus der EP 0 719 637 A2 bekannt.

Die EP 1 566 302 A1 beschreibt ein extrudiertes Produkt mit einer Dekorationsschicht mit einem unregelmäßigen Oberflächenmuster und einer Vielzahl von linearen Vertiefungen.

Aus der US 4,448,835 A ist ein Dichtmaterial für Fenster bekannt, dessen Reibwiderstand geringer und dessen Lebensdauer länger ist als die bekannten Dichtmaterials.

Die US 2002/0110663 A1 betrifft eine Dichtung mit einer harten Trägerschicht und einer Oberflächenbeschichtung mit vermindertem Reibwiderstand.

Ein Dichtungsprofil, bei dem Erhebungen und/oder Vertiefungen unmittelbar im Dichtungsprofil ausgebildet sind, ist aus der DE 196 44 463 A1 bekannt.

Aufgabe der Erfindung ist es daher, ein Verfahren zum Herstellen einer Abdecklippe für den Einstiegsbereich von Kraftfahrzeugen zu schaffen, welche sowohl in optischer als auch in haptischer Hinsicht einer Abdecklippe mit auflaminiertem textilen Material entspricht, die gleiche Verschleißbeständigkeit aufweist und geringere Herstellungskosten mit sich bringt.

Diese Aufgabe wird erfindungsgemäß durch folgende Verfahrensschritte gelöst:
- Vulkanisieren eines Gummiprofils,
- am Ende des Vulkanisationsvorgangs Auftragen eines thermoplastischen Elastomers auf das Gummiprofil,
- Auftragen eines Gleitlacks auf das thermoplastische Elastomer und Aushärten des Gleitlackes bei Temperaturen von bis zu 120°C, so daß die Abdecklippe die Optik und Haptik einer Abdecklippe aus auflaminiertem textilen Material aufweist.

Das erfindungsgemäße Herstellungsverfahren unterscheidet sich von anderen Herstellungsverfahren dadurch, daß erst am Ende des Vulkanisationsvorgangs (und nicht bereits davor) das thermoplastische Elastomer durch einen zweiten Extruder auf das Gummiprofil aufgebracht wird, auf das dann wiederum der Lack aufgetragen wird. Das thermoplastische Elastomer, das eine weiche Oberfläche aufweist (die als "Softtouch" bezeichnet wird) kann in verschiedenen Farben verwendet werden und wirkt optisch wie ein Textil, während es haptisch wie Gummi wirkt. Durch das Aufbringen des Lacks auf den Film aus thermoplastischem Elastomer wird bei geringeren Herstellungskosten ein optischer und haptischer Eindruck erreicht, der dem einer Abdecklippe mit auflaminiertem Textil entspricht. Die Verschleißbeständigkeit der erfindungsgemäßen Abdecklippe entspricht ebenfalls derjenigen einer Abdecklippe aus auflaminiertem textilen Material. Da der Lack auch eingefärbt werden kann, sind beliebige Farbgestaltungen der Abdecklippe möglich.

Gleitlacke sind Dispersionen von Festschmierstoffen in Lösungen von organischen oder anorganischen Bindern in Lösungsmitteln. Sie unterscheiden sich von Industrielacken dadurch, daß sie statt bzw. neben Farbpigmenten Festschmierstoffe enthalten.

Es liegt im Rahmen der Erfindung, daß das thermoplastische Elastomer ausgewählt ist aus der Gruppe bestehend aus thermoplastischen Elastomeren auf Olefinbasis (TPE-O), vernetzten thermoplastischen Elastomeren auf Olefinbasis (TPE-V), thermoplastischen Elastomeren auf Urethanbasis (TPE-U), thermoplastischen Copolymerestern (TPE-E), Styrol-Blockcopolymeren (TPE-S) und thermoplastischen Copolyamiden (TPE-A).

Thermoplastische Elastomere gehören neben den Kunststoffen und den Elastomeren zur Familie der Polymere. Es handelt sich hierbei um heterophasische Copolymere, die harte Phasen (Kunststoffe) und weiche Phasen (Elastomere) enthalten.

Es liegt im Rahmen der Erfindung, daß das thermoplastische Elastomer mit einer Schichtdicke von 0,5 bis 3 mm aufgetragen wird.

Erfindungsgemäß ist vorgesehen, daß der Lack mit einer Schichtdicke von 8 bis 40 µm aufgetragen wird.

Die Schwierigkeit der Herstellung der erfindungsgemäßen Abdecklippe liegt in der Tatsache begründet, daß die Einbrenntemperatur von Lack, insbesondere von Gleitlack, üblicherweise bei etwa 150°C liegt und das thermoplastische Elastomer bei Temperaturen oberhalb von 120°C verbrennt. Es mußte daher ein bei niedrigen Temperaturen aushärtender Lack bzw. Gleitlack gefunden werden.

Eine bevorzugte Weiterbildung der Erfindung besteht darin, daß der Lack bei Temperaturen von bis zu 100°C und bevorzugt bei Temperaturen von bis zu 90°C ausgehärtet wird.

Im Rahmen der Erfindung liegt auch eine Abdecklippe für den Einstiegsbereich von Kraftfahrzeugen mit einem Gummiprofil, wobei ein Film aus thermoplastischem Elastomer auf das Gummiprofil aufgebracht ist, auf den ein Lack aufgebracht ist, die hergestellt ist nach einem erfindungsgemäßen Verfahren.

Nachfolgend wird die Erfindung anhand eines Ausführungsbeispicls näher beschrieben.

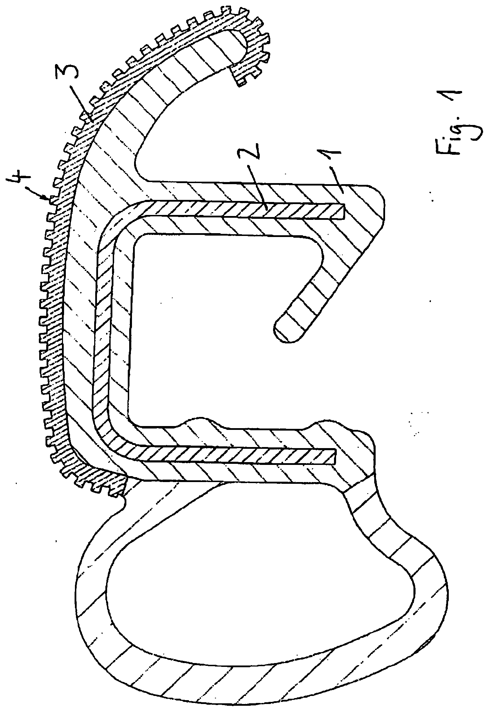

Es zeigt
- Fig. 1: eine erfindungsgemäße Abdecklippe für den Einstiegsbereich von Kraftfahrzeugen in geschnittener Darstellung.

Wie aus Fig. 1 ersichtlich, besteht die erfindungsgemäße Abdecklippe aus einem Gummiprofil 1 mit einer Metallversteifung 2. Auf das Gummiprofil 1 wird am Ende des Vulkanisationsvorgangs ein thermoplastisches Elastomer 3 mit einer Schichtdicke von 0,5 bis 3 mm aufgebracht und auf dieses wiederum ein Gleitlack 4 (auch bezeichnet als "quick cure painting") mit einer Schichtdicke von 8 bis 40 µm aufgetragen, der bei einer Temperatur von ca. 80 bis 100°C eingebrannt wird. Es entsteht eine strukturierte Oberfläche, die wie eine textile Oberfläche aus Cord aussieht und sich auch wie eine solche anfühlt.

## Patentansprüche

1. Herstellungsverfahren für eine Abdecklippe für den Einstiegsbereich von Kraftfahrzeugen mit den folgenden Verfahrensschritten:
• Vulkanisieren eines Gummiprofils (1),
• am Ende des Vulkanisationsvorgangs Auftragen eines thermoplastischen Elastomers (3) auf das Gummiprofil (1),
• Auftragen eines Gleitlacks (4) auf das thermoplastische Elastomer und Aushärten des Gleitlackes (4) bei Temperaturen von bis zu 120°C, so daß die Abdecklippe die Optik und Haptik einer Abdecklippe aus auflaminiertem textilen Material aufweist.

2. Herstellungsverfahren gemäß Anspruch 1, **dadurch gekennzeichnet, daß** das thermoplastische Elastomer (3) ausgewählt ist aus der Gruppe bestehend aus thermoplastischen Elastomeren auf Olefinbasis (TPE-O), vernetzten thermoplastischen Elastomeren auf Olefinbasis (TPE-V), thermoplastischen Elastomeren auf Urethanbasis (TPE-U), thermoplastischen Copolymerestern (TPE-E), Styrol-Blockcopolymeren (TPE-S) und thermoplastischen Copolyamiden (TPE-A).

3. Herstellungsverfahren gemäß Anspruch 1, **dadurch gekennzeichnet, daß** das thermoplastische Elastomer (3) mit einer Schichtdicke von 0,5 bis 3 mm auf das Gummiprofil (1) aufgetragen wird.

4. Herstellungsverfahren gemäß Anspruch 1, **dadurch gekennzeichnet, daß** der Lack (4) mit einer Schichtdicke von 8 bis 40 µm aufgetragen wird.

5. Herstellungsverfahren gemäß Anspruch 4, **dadurch gekennzeichnet, daß** der Lack (4) bei Temperaturen von bis zu 100°C und bevorzugt bei Temperaturen von bis zu 90°C ausgehärtet wird.

6. Abdecklippe für den Einstiegsbereich von Kraftfahrzeugen mit einem Gummiprofil (1), wobei ein Film aus thermoplastischem Elastomer (3) auf das Gummiprofil (1) aufgebracht ist, auf den ein Gleitlack (4) aufgebracht ist, die herstellbar ist nach einem Verfahren gemäß einem der Patentansprüche 1 bis 5.

## Claims

1. Method of producing a sealing lip for the door area of motor vehicles, with the following steps:
• Vulcanisation of a rubber profile (1),
• At the end of the vulcanisation step, application of a thermoplastic elastomer (3) on the rubber profile (1),
• Application of a lubricant coating (4) on the thermoplastic elastomer and curing of the lubricant coating (4) at temperatures of up to 120°C, so that the sealing lip has the visual appearance and the surface feel of a sealing lip of laminated textile materiel.

2. Production method according to claim 1, **characterised in that** the thermoplastic elastomer (3) is selected from the group consisting of thermoplastic olefinic elastomers (TPE-O), thermoplastic vulcanisates (TPE-V), thermoplastic polyurethane elastomers (TPE-U), thermoplastic copolyesters (TPE-E), styrenic block copolymers (TPE-S) and thermoplastic copolyamides (TPE-A).

3. Production method according to claim 1, **characterised in that** the thermoplastic elastomer (3) is applied with a layer thickness of 0.5 to 3 mm on the rubber profile (1).

4. Production method according to claim 1, **characterised in that** the coating (4) is applied with a coating thickness of 8 to 40 µm.

5. Production method according to claim 4, **characterised in that** the coating (4) is cured at temperatures of up to 100°C and preferably at temperatures of up to 90°C.

6. Sealing lip for the door area of motor vehicles, which has a rubber profile (1), wherein said rubber profile (1) has a film of thermoplastic elastomer (3) applied thereon and said thermoplastic elastomer (3) has a lubricant coating (4) applied thereon, said sealing lip being able to be produced according to a method as set forth in any one of the claims 1 to 5.

## Revendications

1. Procédé de fabrication d'une lèvre d'étanchéité pour la zone de montée de véhicules automobiles, **caractérisé par** les étapes suivantes :
- vulcanisation d'un profilé en caoutchouc (1),
- application, à la fin de la procédure de vulcanisation, d'un élastomère thermoplastique (3) sur le profilé en caoutchouc (1),
- application d'un vernis de glissement (4) sur l'élastomère thermoplastique et durcissement du vernis de glissement (4) à des températures allant jusqu'à 120 °C, den manière que la lèvre d'étanchéité possède l'aspect visuel et le toucher d'une lèvre d'étanchéité en matériau textile laminé.

2. Procédé de fabrication selon la revendication 1, **caractérisé en ce que** l'élastomère thermoplastique (3) est choisi dans le groupe composé des élastomères thermoplastiques à base d'oléfine (TPE-O), des élastomères thermoplastiques réticulés à base d'oléfine (TPE-V), des élastomères thermoplastiques à base d'uréthane (TPE-U), des copolyesters thermoplastiques (TPE-E), des copolymères à blocs styréniques (TPE-S) et les copolyamides thermoplastiques (TPE-A).

3. Procédé de fabrication selon la revendication 1, **caractérisé en ce que** l'élastomère thermoplastique (3) est appliqué sur le profilé en caoutchouc (1) avec une épaisseur de couche comprise entre 0,5 et 3 mm.

4. Procédé de fabrication selon la revendication 1, **caractérisé en ce que** le vernis (4) est appliqué avec une épaisseur de couche comprise entre 8 et 40 µm.

5. Procédé de fabrication selon la revendication 4, **caractérisé en ce que** le vernis (4) est durci à des températures allant jusqu'à 100 °C, et de préférence à des températures allant jusqu'à 90 °C.

6. Lèvre de recouvrement pour la zone de montée de véhicules automobiles, avec un profilé en caoutchouc (1), dans laquelle un film d'élastomère thermoplastique (3) est appliqué sur le profilé en caoutchouc (1) et sur lequel film est appliqué un vernis de glissement (4), laquelle lèvre peut être fabriquée par un procédé selon l'une des revendications 1 à 5.
